(19) Europäisches Patentamt / European Patent Office / Office européen des brevets

(11) **EP 4 047 712 A1**

(12) **EUROPEAN PATENT APPLICATION**
published in accordance with Art. 153(4) EPC

(43) Date of publication:
**24.08.2022 Bulletin 2022/34**

(51) International Patent Classification (IPC):
***H01M 10/42*** *(2006.01)*

(21) Application number: **20957906.9**

(22) Date of filing: **24.12.2020**

(86) International application number:
**PCT/CN2020/139183**

(87) International publication number:
**WO 2022/133962 (30.06.2022 Gazette 2022/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Contemporary Amperex Technology Co., Limited**
**Jiaocheng District**
**Ningde City,**
**Fujian 352100 (CN)**

(72) Inventors:
• **LIU, Qian**
  **Ningde City, Fujian 352100 (CN)**
• **YE, Yonghuang**
  **Ningde City, Fujian 352100 (CN)**
• **JIN, Haizu**
  **Ningde City, Fujian 352100 (CN)**
• **LIANG, Chengdu**
  **Ningde City, Fujian 352100 (CN)**
• **LI, Quanguo**
  **Ningde City, Fujian 352100 (CN)**

(74) Representative: **Herrero & Asociados, S.L.**
**Cedaceros, 1**
**28014 Madrid (ES)**

(54) **BATTERY SET, BATTERY PACK, ELECTRICAL APPARATUS, AND FABRICATION METHOD AND FABRICATION DEVICE FOR BATTERY SET**

(57) The present application relates to a battery module, and the battery module includes a first-type battery cell and a second-type battery cell at least connected in series, the first-type battery cell and the second-type battery cell are battery cells of different chemical systems, the first-type battery cell includes N first battery cell(s), the second-type battery cell includes M second battery cell(s), N and M are positive integers, a specific surface area of a positive active substance of the first battery cell is S1, a specific surface area of a positive active substance of the second battery cell is S2, which satisfy: $1 \leq S1/S2 \leq 60$.

FIG. 3

EP 4 047 712 A1

**Description**

**TECHNICAL FIELD**

The present application relates to the technical field of energy storage devices, and in particular to a battery module, a battery pack, an electrical apparatus, and a manufacturing method and manufacturing device of a battery module.

**BACKGROUND**

With the continuous improvement of energy saving and environmental protection requirements, a secondary battery, as a clean and renewable resource, has great application potential in the fields of electronic devices, electric transport, electric toys, and electric equipment. Especially when the secondary battery is used as a power battery, in order to adapt to different working conditions and usage scenarios, it tends to require a secondary battery to have both a large capacity, a high volume energy density and a good power output characteristic.

In order to improve grouping efficiency and better meet requirements of customization, generally, a large capacity secondary battery is composed of a plurality of battery cells of the same chemical system in series or parallel to be combined into a battery module or battery pack. For a single battery cell, to achieve a high volume energy density, it is generally necessary to increase the quantity of active substances in the battery cell and provide more active ions, while to achieve a power output characteristic, it is generally necessary to reduce the quantity of active substances per unit area in positive and negative electrode sheets and shorten a transmission path of active ions, which are contradicted with each other in design of a chemical system of the battery cell. Therefore, it is often difficult for the grouped large capacity battery module or battery pack to have high volume energy density and good power output characteristic at the same time.

Therefore, how to simultaneously improve the energy density and power output characteristic of the secondary battery (especially the battery module or battery pack) has become one of issues to be urgently solved in the research field of secondary batteries.

**SUMMARY**

The present application is completed in view of the foregoing problems existing in the prior art, and its purpose is to provide a battery module, which has a large volume, a high weight energy density as well as excellent power performance by matching physical parameters of positive active substances of battery cells of different chemical systems.

According to a first aspect of the present application, a battery module is provided, the battery module includes a first-type battery cell and a second-type battery cell at least connected in series, the first-type battery cell and the second-type battery cell are battery cells of different chemical systems, the first-type battery cell includes N first battery cell(s), the second-type battery cell includes M second battery cell(s), N and M are positive integers, a specific surface area of a positive active substance of a first battery cell is S1, a specific surface area of a positive active substance of a second battery cell is S2, which satisfy: $1 \leq S1/S2 \leq 60$.

Optionally, $4 \leq S1/S2 \leq 42$, and optionally $7 \leq S1/S2 \leq 35$.

Optionally, the positive active substance of the first battery cell and the positive active substance of the second battery cell further at least satisfy one of the following conditions: (1) a gram capacity of the positive active substance of the second battery cell is higher than a gram capacity of the positive active substance of the first battery cell; (2) a volume average particle size ($D_v50$) of the positive active substance of the first battery cell is D1, and a volume average particle size ($D_v50$) of the positive active substance of the second battery cell is D2, and $0.03 \leq D1/D2 \leq 10$, optionally $0.05 \leq D1/D2 \leq 6$, and further optionally $0.10 \leq D1/D2 \leq 3$; and (3) volume particle size distribution $D_v99$ of the positive active substance of the first battery cell is Z1, and volume particle size distribution $D_v99$ of the positive active substance of the second battery cell is Z2, which satisfy: $0.1 \leq Z1/Z2 \leq 5.5$. Optionally, $0.3 \leq Z1/Z2 \leq 3.0$, and further optionally $0.4 \leq Z1/Z2 \leq 2.5$.

Optionally, a volume average particle size ($D_v50$) D1 of the positive active substance of the first battery cell is 0.2-15 $\mu$m, and a volume average particle size ($D_v50$) D2 of the positive active substance of the second battery cell is 0.5-30 $\mu$m; optionally, D1 is 0.5-10 $\mu$m and D2 is 1-20 $\mu$m; and further optionally, D1 is 1-6 $\mu$m and D2 is 2-15 $\mu$m.

Optionally, a compacted density of a positive electrode sheet of the first battery cell is C1, and a compacted density of a positive electrode sheet of the second battery cell is C2, and $0.35 \leq C1/C2 \leq 0.99$, optionally $0.45 \leq C1/C2 \leq 0.90$, and further optionally, $0.55 \leq C1/C2 \leq 0.85$.

Optionally, a compacted density C1 of a positive electrode sheet of the first battery cell is 1.6-3.0 g/cm$^3$, and a compacted density C2 of a positive electrode sheet of the second battery cell is 3.1-4.2 g/cm$^3$; optionally, a compacted density C1 of a positive electrode sheet of the first battery cell is 2.1-2.8 g/cm$^3$, and a compacted density C2 of a positive electrode sheet of the second battery cell is 3.2-3.7 g/cm$^3$; and further optionally, a compacted density C1 of a positive electrode sheet of the first battery cell is 2.3-2.6 g/cm$^3$, and a compacted density C2 of a positive electrode sheet of the second battery cell is 3.3-3.5 g/cm$^3$.

Optionally, the positive active substance of the first battery cell includes at least one of lithium containing phosphate shown in formula (I) or lithium manganese-based oxide shown in formula (II),

$$LiFe_{1-x2-y2}Mnx_2M'_{y2}PO_4 \qquad \text{formula (I)}$$

$$Li_{1+X3}MneN_{2-e}O_{4-d}B_d \qquad \text{formula (II)}$$

where in formula (I), $0 \leq x2 \leq 1$, $0 \leq y2 \leq 0.1$, and M' is selected from one or more of transition metal elements other than Fe and Mn and non-transition metal elements; and in formula (II), $-0.1 \leq x3 \leq 0.2$, $0 < e \leq 2$, and $0 \leq d < 1$, N is one or more of Ni, Fe, Cr, Ti, Zn, V, Al, Mg, Zr and Ce, and B is one or more of S, N, F, Cl, Br and I;

Optionally, the positive active substance of the first battery cell includes one or more of LiFePO4, $LiMnPO_4$, $LiMn_{1-x3}Fe_{x3}PO_4$, $LiV_{1-x3}Fe_{x3}PO_4$, $LiMn_2O_4$, $LiMn_{1.9}A_{10.1}O_4$, where x3 independently satisfies $0 < x3 < 1$.

Optionally, the positive active substance of the second battery cell includes lithium transition metal oxide shown in formula (III),

$$Li_{1+x1}Ni_aCo_bM_{1-a-b}O_{2-y1}A_{y1} \qquad \text{formula (III)}$$

where $-0.1 \leq x1 \leq 0.2$, $0.3 \leq a < 0.95$, $0 < b < 0.2$, $0 < a+b < 1$, $0 \leq y1 < 0.2$, M is selected from one or more of Mn, Fe, Cr, Ti, Zn, V, Al, Zr and Ce, and A is selected from one or more of S, F, Cl and I.

Optionally, a ratio of a number N of the first cells to a number M of the second cells is $0.1 \leq N/M \leq 50$, and optionally, $0.3 \leq N/M \leq 10$.

According to a second aspect of the present application, a battery pack is provided, including the battery module according to the first aspect.

According to a third aspect of the present application, a power consumption apparatus is provided, including the battery module according to the first aspect or the battery pack according to the second aspect, where the battery module or the battery pack is used as a power source or an energy storage unit of the power consumption apparatus..

According to a fourth aspect of the present application, a manufacturing method of a battery module is provided, including the following steps: acquiring a first-type battery cell and a second-type battery cell, where the first-type battery cell and the second-type battery cell are battery cells of different chemical systems, the first-type battery cell includes N first battery cell(s); the second-type battery cell includes M second battery cell(s), N and M are positive integers; a specific surface area of a positive active substance of a first battery cell is S1, a specific surface area of a positive active substance of a second battery cell is S2, which satisfy: $1 \leq S1/S2 \leq 60$; electrically connecting the first-type battery cell and the second-type battery cell in a manner including series connection to form the battery module according to the first aspect.

According to a fifth aspect of the present application, a manufacturing device of a battery module is provided, including: a clamping arm unit, configured to acquire a first-type battery cell and a second-type battery cell, where the first-type battery cell and the second-type battery cell are battery cells of different chemical systems, the first-type battery cell includes N first battery cell(s); the second battery cell includes M second battery cell(s), N and M are positive integers; a specific surface area of a positive active substance of a first battery cell is S1, a specific surface area of a positive active substance of a second battery cell is S2, which satisfy: $1 \leq S1/S2 \leq 60$; an assembly unit, configured to electrically connect the first-type battery cell and the second-type battery cell in a manner including series connection to form the battery module according to the first aspect; and a control unit, configured to control the clamping arm unit and the assembling unit.

[Advantageous Effects]

The present application provides a battery module, which includes a first-type battery cell and a second-type battery cell of different chemical systems. The first-type battery cell and the second-type battery cell are electrically at least connected in series. According to the present application, a ratio of specific surface areas of positive active substances in the first battery cell and the second battery cell is matched, so that a path for deintercalation and intercalation of lithium and an available capacity of active ions in battery cells of different chemical systems are regulated and controlled, and thus the battery module has a higher volume/weight energy density and excellent power performance.

**BRIEF DESCRIPTION OF THE DRAWINGS**

FIG. 1 is a schematic diagram showing an example of a battery cell of the present application.

FIG. 2 is an exploded view showing an example of the battery cell of the present application shown in FIG. 1.

FIG. 3 is a schematic diagram showing an example of a battery module of the present application.

FIG. 4 is a schematic diagram showing an example of a battery pack of the present application.

FIG. 5 is an exploded view showing an example of the battery pack of the present application shown in FIG. 4.

FIG. 6 is a schematic diagram showing an example of an electrical apparatus using a battery module of the present application as a power source.

[DESCRIPTION OF REFERENCE SIGNS]

5, 5a, 5b battery cells
51 housing
52 electrode assembly
53 cover plate
4 battery module
1 battery pack
2 upper box
3 lower box

DESCRIPTION OF EMBODIMENTS

A "range" disclosed herein is defined in the form of a lower limit and an upper limit. A given range is defined by selecting a lower limit and an upper limit, and the selected lower limit and upper limit define a boundary of a particular range. The range defined in this manner may or may not include end values, and may be combined arbitrarily, that is, any lower limit may be combined with any upper limit to form a range. For example, if ranges of 60-120 and 80-110 are listed for a particular parameter, it is understood that ranges of 60-110 and 80-120 are also contemplated. In addition, if the minimum range values listed are 1 and 2, and the maximum range values listed are 3, 4 and 5, all the following ranges are contemplated: 1-3, 1-4, 1-5, 2-3, 2-4, and 2-5. In the present application, unless otherwise specified, a numerical range "a-b" represents an abbreviated representation of any combination of real numbers between a and b, where both a and b are real numbers. For example, a numerical range "0-5" means that all real numbers between "0-5" have been listed herein, and "0-5" is just an abbreviated representation of a combination of these numerical values. In addition, when a certain parameter is expressed as an integer ≥2, it is equivalent to disclosing that the parameter is, for example, an integer of 2, 3, 4, 5, 6, 7, 8, 9, 10, 11, 12, or the like.

In the present application, unless otherwise specified, all embodiments and preferred embodiments mentioned herein may be combined with each other to form a new technical solution.

In the present application, unless otherwise specified, all technical features and preferred features mentioned herein may be combined with each other to form a new technical solution.

In the present application, unless otherwise specified, all steps mentioned herein may be performed sequentially or randomly, but preferably, performed sequentially. For example, a method includes steps (a) and (b), which means that the method may include steps (a) and (b) performed sequentially, or steps (b) and (a) performed sequentially. For example, the method mentioned may further include step (c), which means that step (c) may be added to the method in any order, for example, the method may include steps (a), (b) and (c), steps (a), (c) and (b), steps (c), (a) and (b), or the like.

In the present application, unless otherwise specified, "comprising" and "containing" mentioned herein are open-ended or closed-ended. For example, the "comprising" and "containing" may mean that other components that are not listed may further be comprised or contained, or only listed components may be comprised or contained.

In the description herein, it should be noted that, unless otherwise specified, "no more than" and "no less than" include all numbers within that range including the end values, and "more" in "one or more" means two or more.

In the description herein, unless otherwise specified, the term "or" is inclusive. For example, the phrase "A or B" means "A, B or both A and B". More particularly, a condition "A or B" is satisfied by any one of the following: A is true (or present) and B is false (or not present); A is false (or not present) and B is true (or present); or both A and B are true (or present).

[Battery Cell]

In the present application, a "battery cell" refers to a cell capable of charging and discharging independently.

A structure of a battery cell includes a positive electrode sheet, a negative electrode sheet, a separator, an electrolytic solution, an outer package for packaging the positive electrode sheet, the negative electrode sheet, the separator, and the electrolytic solution, or the like. In the present application, types and shapes of the battery cell are not specifically restricted, which may be a pouch battery cell, a cylindrical battery cell, a square battery cell and other types of battery cells. The battery cell in the present application may be a lithium ion battery cell, a potassium ion battery cell, a sodium ion battery cell, a lithium sulfur battery cell, or the like, and particularly preferably, a lithium ion battery cell. During charging and discharging of a battery, active ions are intercalated and disintercalated back and forth between the positive electrode sheet and the negative electrode sheet. The electrolytic solution plays a role of conducting ions between the positive electrode sheet and the negative electrode sheet.

In the present application, a "chemical system" of a battery cell is classified according to the types of a positive active substance used in a positive electrode sheet in the battery cell, and elements or substances doped or coated in the positive active substance are not limited. For example, a battery cell whose positive active substance is lithium iron phosphate (including that doped with Mn or V element) may be defined as a battery cell of a lithium iron phosphate chemical system. A battery cell whose positive active substance is lithium nickel cobalt manganate (generally referred to as NCM for short) may be defined as a battery cell of an NCM chemical system. Further, when a first-type battery cell and a second-type battery cell are both battery cells of an NCM chemical system, a chemical system of a battery cell may be further limited based on the relative content of nickel, cobalt, and manganese in the positive active substance. For example, a battery cell whose positive active substance is $LiNi_{0.5}Co_{0.2}Mn_{0.3}O_2$ (generally referred to as NCM523 for short) may be defined as a battery cell of an NCM523 chemical system, a battery cell whose positive active substance is $LiNi_{0.6}Co_{0.2}Mn_{0.2}O_2$ (generally referred to as NCM622 for short) may be defined as a battery cell of an NCM622 chemical system, and a battery cell whose positive active substance is $LiNi_{0.8}Co_{0.1}Mn_{0.1}O_2$ (generally referred to as NCM811 for short) may be defined as a battery cell of an NCM811 chemical system. A battery cell whose positive material is a nickel cobalt lithium aluminate system cell (generally referred to as NCA) may be defined as a battery cell of an NCA chemical system. In addition, in the present application, a battery cell of a hybrid system may also be used, for example, a battery cell of a hybrid system including NCM and NCA.

Hereinafter, basic structures of a positive electrode sheet, a negative electrode sheet, an electrolytic solution and a separator included in the battery cell in the present application will be described first.

<Positive Electrode Sheet>

In the battery cell of the present application, the positive electrode sheet includes a positive current collector, and a positive film layer arranged on at least one surface of the positive current collector and including a positive active substance. For example, the positive current collector has two opposite surfaces in its thickness direction, and the positive film layer is disposed on either or both of the two opposite surfaces of the positive current collector. In the battery cell of the present application, the positive current collector may be a metal foil or a composite current collector, for example, the metal foil may be an aluminum foil, while the composite current collector may include a polymer material base layer and a metal layer formed on at least one surface of the polymer material base layer. The composite current collector can be formed by synthesizing a metal material (aluminum, aluminum alloy, nickel, nickel alloy, titanium, titanium alloy, silver and silver alloy, or the like) on a polymer material substrate (such as a substrate of polypropylene PP, polyethylene terephthalate PET, polybutylene terephthalate PBT, polystyrene PS, polyethylene PE and their copolymers).

In the battery cell of the present application, the positive active substance may be a positive active substance for the battery cell known in the art. For example, the positive active substance may include one or more of the following: lithium containing phosphate in an olivine structure, lithium transition metal oxide and their respective modified compounds. But the present application is not limited to these materials, and other traditional materials that can be used as positive active substances of the battery cell may also be used. One type of these positive active substances may be used alone, or two or more types may be used in combination. Examples of the lithium transition metal oxide may include, but are not limited to, one or more of lithium cobalt oxide (such as $LiCoO_2$), lithium nickel oxide (such as $LiNiO_2$), lithium manganese oxide (such as $LiMnO_2$, $LiMn_2O_4$), lithium nickel cobalt oxide, lithium manganese cobalt oxide, lithium nickel manganese oxide, lithium nickel cobalt manganese oxide (such as $LiNi_{1/3}Co_{1/3}Mn_{1/3}O_2$ (NCM333), $LiNi_{0.5}Co_{0.2}Mn_{0.3}O_2$ (NCM523), $LiNi_{0.5}Co_{0.25}Mn_{0.25}O_2$ (NCM211), $LiNi_{0.6}Co_{0.2}Mn_{0.2}O_2$ (NCM622), $LiNi_{0.8}Co_{0.1}Mn_{0.1}O_2$ (NCM811)), lithium nickel cobalt aluminum oxide (such as $LiNi_{0.85}CO_{0.15}Al_{0.05}O_2$) and their modified compounds. Examples of the lithium containing phosphate in the olivine structure may include, but are not limited to, one or more of lithium iron phosphate (such as $LiFePO_4$ (LFP)), a composite material of lithium iron phosphate and carbon, lithium manganese phosphate (such as $LiMnPO_4$), a composite material of lithium manganese phosphate and carbon, lithium manganese iron phosphate, and a composite material of lithium manganese iron phosphate and carbon.

In some embodiments, the positive film layer may also optionally include a binder. Non-limiting examples for the binder of the positive film layer may include one or more of the following: polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer and fluoroacrylate resin.

In some embodiments, the positive film layer may further optionally include a conductive agent. Examples for the conductive agent of the positive film layer may include one or more of superconducting carbon, acetylene black, carbon black, Ketjen black, carbon dots, carbon nanotubes, graphene, and carbon nanofibers.

In one embodiment of the present application, the positive electrode can be prepared in the following manner. The above components for preparing the positive electrode, such as the positive active substance, the conductive agent, the binder, and any other components are dispersed in a solvent (such as N-methylpyrrolidone) to form a uniform positive electrode slurry, the positive electrode slurry is coated on the positive current collector, and then after drying, cold pressing and other processes, the positive electrode sheet can be obtained.

<Negative Electrode Sheet>

The battery cell of the present application includes a negative electrode sheet, the negative electrode sheet includes a negative current collector and a negative film layer arranged on at least one surface of the negative current collector, and the negative film layer includes a negative active material.

In one embodiment of the present application, the negative active material of the negative film layer includes common negative active materials, for example one or more of natural graphite, other artificial graphite, soft carbon, hard carbon, silicon-based materials, tin-based materials and lithium titanate. The silicon-based material may be selected from one or more of elemental silicon, silicon oxide, and silicon-carbon composite. The tin-based material may be selected from one or more of elemental tin, tin oxide compounds, and tin alloys.

In the battery cell of the present application, the negative film sheet includes a negative active material, an optional binder, an optional conductive agent and other optional adjuvants, and is usually formed by coating and drying a negative electrode slurry. The negative electrode slurry is usually formed by dispersing the negative active material, the optional conductive agent, the binder and the like in the solvent and stirring them evenly. The solvent can be N-methylpyrrolidone (NMP) or deionized water.

As an example, the conductive agent may include one or more of superconducting carbon, carbon black (such as acetylene black, Ketjen black), carbon dots, carbon nanotubes, graphene, and carbon nanofibers.

As an example, the binder may include one or more of styrene butadiene rubber (SBR), water-soluble unsaturated resin SR-1B, polyacrylic acid (PAA), polyacrylate sodium (PAAS), polyacrylamide (PAM), polyvinyl alcohol (PVA), sodium alginate (SA) and carboxymethyl chitosan (CMCS). As an example, the binder may include one or more of styrene butadiene rubber (SBR), polyvinyl alcohol (PVA), sodium alginate (SA), polymethacrylic acid (PMAA) and carboxymethyl chitosan (CMCS). Other optional adjuvants are, for example, thickeners (such as sodium carboxymethyl cellulose CMC-Na), PTC thermistor materials, and the like.

In addition, in the battery cell of the present application, the negative electrode sheet does not exclude other additional functional layers other than the negative film layer. For example, in some embodiments, the negative electrode sheet of the present application may further include a conductive primer layer (for example, made of the conductive agent and the binder) sandwiched between the negative current collector and a first negative film layer and disposed on a surface of the negative current collector. In some other embodiments, the negative electrode sheet of the present application may further include a covering protective layer covering a surface of a second negative film layer.

In the battery cell of the present application, the negative current collector may be a metal foil or a composite current collector. For example, the metal foil may be a copper foil, a silver foil, an iron foil, or a foil composed of an alloy of the foregoing metals. The composite current collector may include a polymer material base layer and a metal layer formed on at least one surface of the polymer material base layer, and may be formed by synthesizing a metal material (copper, copper alloy, nickel, nickel alloy, titanium, titanium alloy, silver, and silver alloy, or the like) on the polymer material base layer (such as a base layer made of polypropylene PP, polyethylene terephthalate PET, polybutylene terephthalate PBT, polystyrene PS, polyethylene PE and their copolymers).

<Electrolytic Solution>

An electrolytic solution plays a role of conducting ions between a positive electrode sheet and a negative electrode sheet. The electrolytic solution includes an electrolyte salt and a solvent. In some embodiments, the electrolyte salt may be selected from one or more of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bisfluorosulfonimide (LiFSI), lithium bistrifluoromethanesulfonimide (LiTFSI), lithium trifluoromethanesulfonate (LiTFS), lithium difluoroborate (LiDFOB), lithium bis(oxalate)borate (LiBOB), lithium difluorophosphate ($LiPO_2F_2$), lithium difluorobisoxalate phosphate (LiDFOP) and lithium tetrafluorooxalate phosphate (LiTFOP).

In one embodiment of the present application, the solvent may be selected from one or more of the following: ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethylene propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methyl sulfonyl methane (MSM), ethyl methyl sulfone (EMS) and diethyl sulfone (ESE).

In one embodiment of the present application, based on a total weight of the electrolytic solution, the content of the solvent is 60-99% by weight, such as 65-95% by weight, or 70-90% by weight, or 75-89% by weight, or 80-85% by weight. In one embodiment of the present application, based on a total weight of the electrolytic solution, the content of the electrolyte is 1-40% by weight, for example, 5-35% by weight, or 10-30% by weight, or 11-25% by weight, or 15-20% by weight.

In one embodiment of the present application, the electrolytic solution may further optionally include an additive. For example, the additive may include one or more of the following: a negative film-forming additive, a positive film-forming additive, and an additive that can improve certain performance of a battery, such as an additive that improves overcharging performance of a battery, an additive that improves high-temperature performance of a battery, and an additive that improves low-temperature performance of a battery.

<Separator>

In one embodiment of the present application, the battery cell further includes a separator, which separates an anode side and a cathode side of the battery cell, and provides selective penetration or barrier to substances of different types, sizes, and charges in a system. For example, the separator can insulate electrons, physically separate positive and negative active substances of the battery cell, to prevent internal short circuits and form an electric field in a certain direction, and at the same time enable ions in the battery to pass through the separator and move between positive and negative electrodes.

In one embodiment of the present application, a material used to prepare the separator may include one or more of glass fiber, non-woven fabric, polyethylene, polypropylene, and polyvinylidene fluoride. The separator may be a single-layer film or a multilayer composite film. When the separator is a multilayer composite film, materials of layers may be the same or different.

In one embodiment of the present application, the above positive electrode sheet, negative electrode sheet and separator may be made into an electrode assembly/a bare battery cell through a winding process or a lamination process.

In one embodiment of the present application, the battery cell may include an outer package, and the outer package may be used to package the above electrode assembly and electrolytic solution. In some embodiments, the outer package of the battery cell may be a hard shell, such as a hard plastic shell, an aluminum shell, a steel shell, and the like. In other embodiments, the outer package of the battery cell may be a soft package, such as a bag-type soft package. A material of the soft package may be plastic, for example, one or more of polypropylene (PP), polybutylene terephthalate (PBT), polybutylene succinate (PBS), and the like.

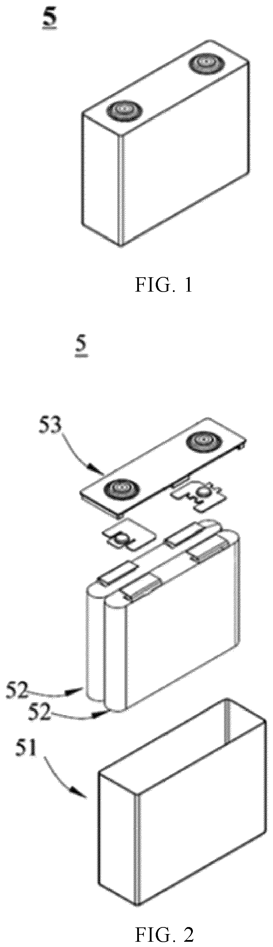

FIG. 1 is a schematic diagram showing an example of a battery cell 5 of the present application. FIG. 2 is an exploded view showing an example of the battery cell 5 of the present application shown in FIG. 1.

The outer package may include a housing 51 and a cover plate 53, and the housing 51 may include a bottom plate and a side plate connected to the bottom plate. The bottom plate and the side plate enclose and form an accommodating cavity. The housing 51 has an opening communicating with the accommodating cavity, and the cover plate 53 can cover the opening to close the accommodating cavity. A positive electrode sheet, a negative electrode sheet and a separator can form an electrode assembly 52 through a winding process or a lamination process, the electrode assembly is packaged in the accommodating cavity, and the electrolytic solution is infiltrated in the electrode assembly 52. The number of electrode assemblies 52 contained in the battery cell 5 may be one or more.

[Battery Module]

In the present application, a "battery module" is formed by electrically connecting a certain number of battery cells together and putting them into a frame in order to protect the battery cells from external impact, heat, vibration, etc. The shape of the battery cell of the present application may be cylindrical, square or other arbitrary shapes.

In the present application, several battery cells may be assembled together to form a battery module. The battery module contains two or more battery cells, and the specific number depends on the application of the battery module and parameters of a single battery module.

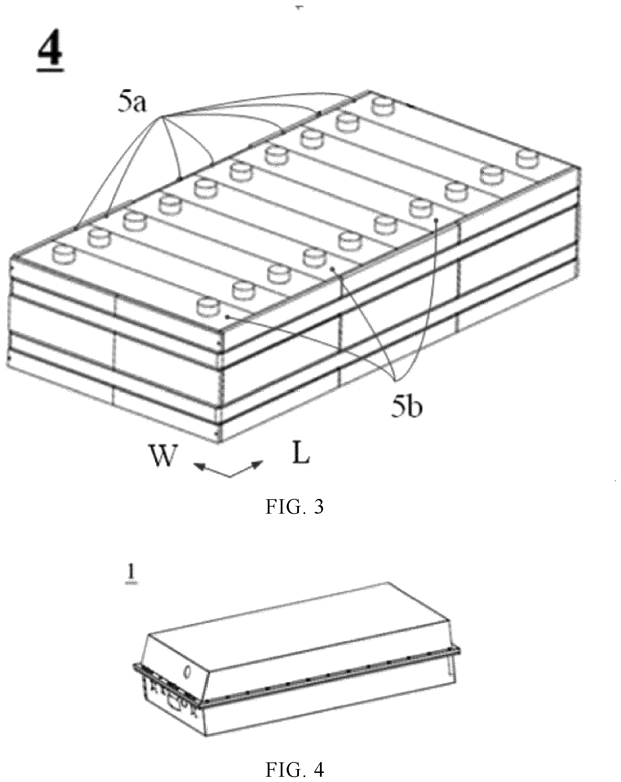

FIG. 3 is a schematic diagram showing an example of a battery module of the present application. Referring to FIG. 3, in a battery module 4, a plurality of battery cells 5a, 5b may be arranged in sequence along a length direction of the battery module 4 (5a may be a first battery cell, and 5b may be a second battery cell). Certainly, the battery cells may also be arranged in any other manner. Furthermore, the plurality of battery cells 5a, 5b may be fixed by fasteners. Optionally, the battery module 4 may further include a housing with an accommodating space, and the plurality of groups 5a, 5b are accommodated in the accommodating space.

<About Design of First-Type Battery Cell and Second-Type Battery Cell>

In the present application, the battery module includes a first-type battery cell and a second-type battery cell at least connected in series, the first-type battery cell and the second-type battery cell are battery cells of different chemical systems, the first-type battery cell includes N first battery cell(s), the second-type battery cell includes M second battery cell(s), N and M are positive integers, and a specific surface area of a positive active substance of the first battery cell is S1, a specific surface area of a positive active substance of the second battery cell is S2, and S1 and S2 satisfy: $1 \leq S1/S2 \leq 60$.

As a result of diligent study, the inventor of the present application found that when battery cells of different chemical systems are connected in series to form a battery module, a ratio of the specific surface areas of the positive active substances of the two types of battery cells is required to be controlled in an appropriate range, so that the positive active substances in the first-type battery cell and the second-type battery cell can fully utilize their designed capacities while realizing matching of an effective transmission path of lithium ions in the first battery cell and the second battery cell, thereby ensuring that the battery module has a higher energy density and good power performance.

In some embodiments of the present application, $1 \leq S1/S2 \leq 60$. Optionally, $4 \leq S1/S2 \leq 42$. Further, optionally, $7 \leq S1/S2 \leq 35$. Specifically, S1/S2 may be 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, or its value is within a range obtained by combining any two of the foregoing values.

In the present application, the specific surface area of the positive active substance may be tested by a method known in the art. For specific test methods and steps, reference is made to the standard of GB/T 19587-2004 *Determination of Specific Surface Area of Solid Substances by Gas Adsorption Using the BET Method.* As an example, an instrument with a model of NOVA 2000e may be used, and the following process is adopted for testing: (1) take a certain quantity of samples (for example, 2.0-15.0g); (2) put the samples into a sample tube, and put it into a heating pack to perform degassing processing (a condition for degassing is 200°C, 2 hours); (3) after the degassing is completed, when a temperature of a degassing station lowers to a normal temperature, remove the sample tube from the degassing station, and weigh and calculate a total mass of the samples; and (4) put the sample tube into a test filling rod to test a specific surface area of the sample.

In some embodiments of the present application, the positive active substance of the first battery cell and the positive active substance of the second battery cell also satisfy that a gram capacity of the positive active substance of the second battery cell is higher than a gram capacity of the positive active substance of the first battery cell. In the present application, on the basis that the specific surface area of the positive active substance of the first battery cell and the specific surface area of the positive active substance of the second battery cell satisfy the foregoing relationship, it is further selected that the gram capacity of the positive active substance of the second battery cell is higher than the gram capacity of the positive active substance of the first battery cell, which is conducive to better complementing capacity characteristics and dynamic characteristics of the first battery cell and the second battery cell, thereby further improving a volume/mass energy density and power output characteristics of the battery module.

In the present application, the gram capacity of the positive active substance may be tested by a method known in the art. As an example, the following method may be used for testing:

   1) test method of capacity: select a battery cell to be tested, use a battery cell charging and discharging motor and a high and low temperature box to test a charge capacity and a discharge capacity of the battery cell till full charge at a standard rate at 25°C, where the discharge capacity is a capacity value of the battery cell, and a charging-discharging rate is 0.33C (C represents a rated capacity of the battery cell. A charge/discharge current is the rate multiplied by the rated capacity of the battery cell, and the rated capacity is subject to a capacity of a battery cell identified in the GBT certification document of the battery cell);

   2) gram capacity of positive active substance = capacity of battery cell /(mass of electrode sheet-mass of positive current collector) $\times 100\%$.

In some embodiments of the present application, a volume average particle size ($D_v50$) of the positive active substance of the first battery cell is D1, and a volume average particle size ($D_v50$) of the positive active substance of the second battery cell is D2, and $0.01 \leq D1/D2 \leq 10$. Optionally, $0.03 \leq D1/D2 \leq 6$. Further optionally, $0.10 \leq D1/D2 \leq 3$. Specifically, D1/D2 may be 0.01, 0.02, 0.03, 0.10, 0.2, 0.3, 0.4, 0.45, 0.5, 0.55, 0.6, 0.65, 0.7, 0.75, 0.8, 0.85, 0.9, 0.95, 1, 1.5, 2, 2.5, 3, 3.5, 4, 4.5, 5, 5.5, 6, 6.5, 7, 7.5, 8, 8.5, 9, 9.5, 10, or its value is within a range obtained by combining any two of the foregoing values. In the present application, the volume average particle sizes of the positive active substances in the first battery cell and the second battery cell are further controlled to be within the foregoing range, so that matching of a transmission distance of active ions in the first and second battery cells between the active material particles may be realized, which is conducive to further improving consistency of the power characteristics of the first and second battery cells and further improving the power output characteristics of the battery module.

In some embodiments of the present application, a volume average particle size ($D_v50$) D1 of the positive active substance of the first-type battery cell is 0.2-15 μm. Optionally, D1 is 0.5-10 μm. Further optionally, D1 is 1-6 μm. Specifically, D1 may be 0.2, 0.3, 0.4, 0.5, 0.6, 0.7, 0.8, 0.9, 1, 1.5, 2, 2.5, 3, 3.5, 4, 4.5, 5, 5.5, 6, 6.5, 7, 7.5, 8, 8.5, 9, 9.5, 10, 10.5, 11, 11.5, 12, 12.5, 13, 13.5, 14, 14.5, 15, or its value is within a range obtained by combining any two of the foregoing values.

In some embodiments of the present application, a volume average particle size ($D_v50$) D2 of the positive active substance of the second-type battery cell is 0.5-30 μm. Optionally, D2 is 1-20 μm. Optionally, D2 is 2-15 μm. Specifically, D2 may be 0.5, 0.6, 0.7, 0.8, 0.9, 1, 1.5, 2, 2.5, 3, 3.5, 4, 4.5, 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, 18, 18.5, 19, 19.5, 20, 20.5, 21, 21.5, 22, 22.5, 23, 23.5, 24, 24.5, 25, 25.5, 26, 26.5, 27, 27.5, 28, 28.5, 29, 29.5, 30, or its value is within a range obtained by combining any two of the foregoing values.

In some embodiments of the present application, volume particle size distribution $D_v99$ of the positive active substance of the first battery cell is Z1, and volume particle size distribution $D_v99$ of the positive active substance of the second battery cell is Z2, and Z1 and Z2 satisfy: $0.1 \leq Z1/Z2 \leq 5.5$. Optionally, $0.3 \leq Z1/Z2 \leq 3.0$, and further optionally $0.4 \leq Z1/Z2 \leq 2.5$. Specifically, Z1/Z2 may be 0.1, 0.2, 0.3, 0.4, 0.5, 0.6, 0.7, 0.8, 0.9, 1, 1.5, 2, 2.5, 3, 3.5, 4, 4.5, 4, 1.5, 1.6, 1.7, 1.8, 1.9, 2.0, 2.1, 2.2, 2.3, 2.4, 2.5, 2.6, 2.7, 2.8, 2.9, 3.0, 3.1, 3.2, 3.3, 3.4, 3.5, 3.6, 3.7, 3.8, 3.9, 4.0, 4.1, 4.2, 4.3, 4.4, 4.5, 4.6, 4.7, 4.8, 4.9, 5.0, 5.1, 5.2, 5.3, 5.4, 5.5, or its value is within a range obtained by combining any two of the foregoing values. In the present application, "$D_v99$" refers to a particle size of a positive active substance whose volume accumulation reaches 99% from a small particle size side in the volume-based particle size distribution, that is, a volume of a positive active material smaller than this particle size accounts for 99% of the total volume of the positive active material. When the volume particle size distribution $D_v99$ is within a certain range, it is beneficial to improve a compacted density of the electrode sheet, reduce a transmission channel length of lithium ions and electrons, and improve the interface transmission impedance. In the present application, the volume particle size distribution $D_v99$ of the positive active substances in the first battery cell and the second battery cell is further controlled to be within the foregoing range, the volume energy density of the battery module could be improved while ensuring better power output characteristics of the battery module.

In the present application, the volume particle size distribution $D_v99$ and the volume average particle size $D_v50$ of the positive active substance may be tested by methods known in the art. As an example, the following method may be adopted for testing: particle size distribution characteristics of the positive active substance are tested by using a laser scattering method, the testing instrument is MasterSizer 2000, and the testing steps mainly refer to the standard GB/T19077-2016.

In some embodiments of the present application, a compacted density of a positive electrode sheet of the first battery cell is C1, and a compacted density of a positive electrode sheet of the second battery cell is C2, and $0.35 \leq C1/C2 \leq 0.99$. Optionally, $0.45 \leq C1/C2 \leq 0.90$. Further optionally, $0.55 \leq C1/C2 \leq 0.85$. Specifically, C1/C2 may be 0.35, 0.4, 0.45, 0.5, 0.55, 0.6, 0.65, 0.7, 0.75, 0.8, 0.85, 0.9, 0.95, 0.99, or its value is within a range obtained by combining any two of the foregoing values. In the present application, the compacted density of the positive electrode sheet refers to a density of a positive film layer on one-side surface of the positive current collector. When a ratio of compacted densities of the positive electrode sheets in the first battery cell and the second battery cell is within the foregoing range, matching of the filling amount of active substances and the transmission distance of active ions in the positive electrode sheets in the first battery cell and the second battery cell may be realized, which is conducive to further improving the volume energy density of the battery module while ensuring the excellent power output characteristics of the battery module.

In some embodiments of the present application, a compacted density C1 of a positive electrode sheet of the first battery cell is 1.6-3.0 g/cm³. Optionally, C1 is 2.1-2.8 g/cm³. Further optionally, C1 is 2.3-2.6 g/cm³. Specifically, C1 may be 1.6, 1.65, 1.7, 1.75, 1.8, 1.85, 1.9, 1.95, 2.0, 2.05, 2.1, 2.15, 2.2, 2.25, 2.3, 2.35, 2.4, 2.45, 2.5, 2.55, 2.6, 2.7, 2.75, 2.8, 2.85, 2.9, 2.95, 3.0, or its value is within a range obtained by combining any two of the foregoing values.

In some embodiments of the present application, a compacted density C2 of a positive electrode sheet of the second battery cell is 3.1-4.2 g/cm³. Optionally, C2 is 3.2-3.7 g/cm³. Further, optionally, C2 is 3.3-3.5 g/cm³. Specifically, C2 may be 3.1, 3.15, 3.2, 3.25, 3.3, 3.35, 3.4, 3.45, 3.5, 3.55, 3.6, 3.65, 3.7, 3.75, 3.8, 3.85, 3.9, 3.95, 4.0, 4.05, 4.1, 4.15, 4.2, or its value is within a range obtained by combining any two of the foregoing values.

In the present application, the compacted density of the positive electrode sheet may be tested by a method known in the art. As an example, the following method may be adopted for testing: take a single-sided coated and cold-pressed positive electrode sheet (if it is a double-sided coated electrode sheet, a positive film layer on one side may be wiped off first), or a positive electrode sheet disassembled from a battery cell (the positive electrode sheet disassembled from the battery cell may be simply washed with DMC to remove the residual electrolytic solution or reaction byproducts on the surface and inside of the electrode sheet), and punch and cut it into a small round sheet with an area of S1, weigh its weight, which is denoted as M1; test a thickness of positive film layer, which is denoted as H; and then wipe off the positive film layer, and weigh a weight of the positive current collector, which is denoted as M2, where a compacted density of the positive film layer is dc = (M1-M2)/S1/H.

In some embodiments of the present application, the positive active substance of the first battery cell includes at least one of lithium containing phosphate shown in formula (I) or lithium manganese-based oxide shown in formula (II),

$$LiFe_{1-x2-y2}Mn_{x2}M'_{y2}PO_4 \qquad \text{formula (I)}$$

$$Li_{1+x3}Mn_eN_{2-e}O_{4-d}B_d \qquad \text{formula (II)}$$

where in formula (I), $0 \leq x2 \leq 1$, $0 \leq y2 \leq 0.1$, and M' is selected from one or more of transition metal elements other than Fe and Mn and non-transition metal elements; and in formula (II), $-0.1 \leq x3 \leq 0.2$, $0 < e \leq 2$, and $0 \leq d < 1$, N is one or more of Ni, Fe, Cr, Ti, Zn, V, Al, Mg, Zr and Ce, and B is one or more of S, N, F, Cl, Br and I.

In some embodiments of the present application, the positive active substance of the first battery cell includes one or more of $LiFePO_4$, $LiMnPO_4$, $LiMn_{1-x3}Fe_{x3}PO_4$, $LiV_{1-x3}Fe_{x3}PO_4$, $LiMn_2O_4$, $LiMn_{1.9}Al_{0.1}O_4$, where x3 independently satisfies $0 < x3 < 1$. In the present application, the lithium containing phosphate has good cycle stability and a long cycle life, and the first battery cell using this type of positive active substance has a long cycle life, which is conducive to prolonging the cycle life of the battery module. In middle and late stages of the cycle life of the battery module, the power output characteristics of the battery module could be further improved by using the technical advantage of slow power attenuation of this type of first battery cell.

In some embodiments of the present application, the positive active substance of the second battery cell includes lithium transition metal oxide shown in formula (III),

$$Li_{1+x1}Ni_aCo_bM_{1-a-b}O_{2-y1}A_{y1} \qquad \text{formula (III)}$$

where $-0.1 \leq x1 \leq 0.2$, $0.3 \leq a < 0.95$, $0 < b < 0.2$, $0 < a+b < 1$, $0 \leq y1 < 0.2$, M is selected from one or more of Mn, Fe, Cr, Ti, Zn, V, Al, Zr and Ce, and A is selected from one or more of S, F, Cl and I. In the present application, when the positive active substance is used in the second battery cell, the volume energy density of the first battery cell may be further improved by utilizing the high gram capacity of the above substance, so that the volume energy density of the battery module is also significantly improved.

As a result of diligent study, the inventor of the present application found that a ratio of specific surface areas of positive active substances of two types of battery cells needs to be controlled in a suitable range for the following reasons. Firstly, when a first-type battery cell uses a polyanionic positive active substance (such as lithium iron phosphate with an olivine structure), lithium ions can only be transmitted in one direction in this type of active substance, and a one-dimensional transmission channel leads to poor ionic conductivity of materials; meanwhile, the polyanionic material has a large band gap, and conductivity of the conventional polyanionic material is close to that of an insulator. Therefore, in order to improve the electrical conductivity and ionic conductivity of the polyanionic material, the specific surface area of the material is required to be increased. One way is to reduce the particle size of the active material (even to a nanometer level), and the other way is to coat the particle with carbon a surface to form porous carbon on the surface. Nanosized particles and porous carbon on the surface will both increase the specific surface area of the material. However, the specific surface area should not be too high, because an excessive high specific surface area leads to the decrease of the compacted density of the material, which affects the weight and volume energy density of the battery cell. Moreover, an excessive high specific surface area causes the material to absorb excessive solvent and conductive carbon when a positive electrode slurry is prepared, which results in too high viscosity of the slurry, excessive viscosity rebound, even the phenomenon of the slurry gel so that coating cannot be continued any more, and also leads to too low solid content of the slurry so that the coating production efficiency is affected. In addition, when the second-type battery cell uses a layered transition metal oxide as the positive active substance (such as lithium nickel cobalt manganate), in this type of active substance, lithium ions may be transported in a lithium layer, and a two-dimensional transmission channel enables the material to have relatively high ionic conductivity and better electrical conductivity than an olivine-type material. Therefore, this type of active material allows the material to have a larger particle and a lower specific surface area so that the material and slurry are easier to process, and the compacted density of the material and the electrode sheet is higher, and thus the weight and volume energy density of the battery cell are higher. However, if the particle size is too large and the specific surface area is too low, it is not conducive to the transmission of lithium ions and electrons, which causes the gram capacity of the material to decrease and the impedance thereof to increase, thereby affecting the power performance. Therefore, the specific surface areas of these two types of positive active substances need to be reasonably matched.

In some embodiments of the present application, in the battery module, a ratio of the number N of the first cells to the number of the second cells is 0.1 to 50, and optionally, 0.3 to 10.

In the battery module of the present application, the first-type battery cell and the second-type battery cell are electrically connected, so as to output electric energy with the required voltage and current or store electric energy. The first-type battery cell and the second-type battery cell may be electrically connected in a manner of series connection or a combination of series/parallel connection. In the present application, when the first-type battery cell and the second-type battery cell are electrically at least connected in series, charging and discharging may be synchronously performed on the first-type battery cell and the second-type battery cell, which is convenient for achieving consistent capacity attenuation characteristics of battery cells of different chemical systems in the battery module, and is conducive to realizing a long cycle service life of the battery module. In a specific example, the first-type battery cell and the second-type battery cell are electrically connected in series.

In some embodiments of the present application, the electrical connection of the first-type battery cell and the second-type battery cell also includes parallel connection. In the present application, the parallel connection of the first-type battery cell and the second-type battery cell may refers to the following: a plurality of first-type battery cells and the second-type battery cells are connected in series to form a submodule, and then on this basis, more than two submodules with the same total voltage are connected in parallel. This could further improve an external output current of the battery module.

[Battery Pack]

In one embodiment of the present application, two or more of the foregoing battery modules may be assembled into a battery pack, and the number of battery modules contained in the battery pack depends on the application of the battery pack and the parameter of a single battery module. The battery pack may include a battery box and a plurality of battery modules provided in the battery box. The battery box includes an upper box and a lower box. The upper box can cover the lower box and match it well to form a closed space for accommodating the battery module. The two or more battery modules may be arranged in the battery box in a desired manner. In the present application, "the battery pack" is made by further assembling various control and protection systems such as a battery management system and a thermal management system, for one or more battery modules (or a combination directly formed by a plurality of battery cells).

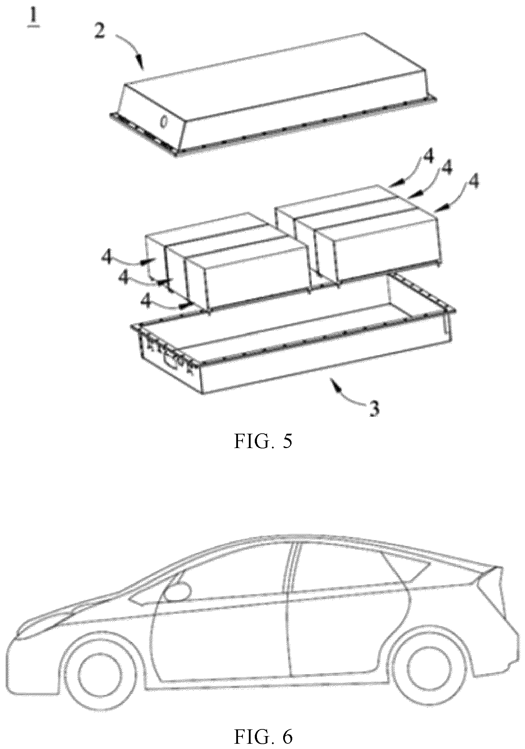

FIG. 4 is a schematic diagram showing an example of a battery pack 1 of the present application. FIG. 5 is an exploded view showing an example of the battery pack 1 of the present application shown in FIG. 4. Referring to FIGS. 4 and 5, the battery pack 1 may include a battery box and a plurality of battery modules 4 arranged in the battery box. The battery box includes an upper box 2 and a lower box 3. The upper box 2 is configured to cover the lower box 3, which forms a closed space configured to accommodate the battery module 4. The plurality of battery modules 4 may be arranged in the battery box in any manner.

[Power Consumption Apparatus]

In one embodiment of the present application, a power consumption apparatus of the present application includes at least one of the battery module or battery pack of the present application, and the battery module or battery pack may be used as a power source or an energy storage unit of the power consumption apparatus. The power consumption apparatus includes, but is not limited to, a mobile digital apparatus (such as a mobile phone, a notebook computer), an electric vehicle (such as a pure electric vehicle, a hybrid electric vehicle, a plug-in hybrid electric vehicle, an electric bicycle, an electric scooter, an electric golf cart, an electric truck), an electric train, a ship and a satellite, an energy storage system, or the like.

FIG. 6 is a schematic diagram showing an example of a power consumption apparatus using a battery module of the present application as a power source. The power consumption apparatus is a pure electric vehicle, a hybrid electric vehicle, or a plug-in hybrid electric vehicle. In order to satisfy requirements of high power and high energy density of the power consumption apparatus, a battery pack or a battery module may be used.

[Manufacturing Method and Manufacturing Device]

In the present application, a manufacturing method of a battery module is provided, which includes the following steps: acquiring a first-type battery cell and a second-type battery cell, where the first-type battery cell and the second-type battery cell are batteries of different chemical systems, and the first-type battery cell includes N first battery cell(s); the second-type battery cell includes M second battery cell(s); and N and M are positive integers; a specific surface area of a positive active substance of the first battery cell is S1, and a specific surface area of a positive active substance of the second battery cell is S2, S1 and S2 satisfy: $1 \leq S1/S2 \leq 60$; electrically connecting the first-type battery cell and the second-type battery cell in a manner including series connection to form the battery module as described above.

In the present application, a manufacturing device of a battery module is provided, which includes includes a clamping arm unit, configured to acquire a first-type battery cell and a second-type battery cell, where the first-type battery cell and the second-type battery cell are battery cells of different chemical systems, the first-type battery cell includes N first battery cell(s); the second battery cell includes M second battery cell(s), N and M are positive integers; and a specific surface area of a positive active substance of the first battery cell is S1, a specific surface area of a positive active substance of the second battery cell is S2, S1 and S2 satisfy: $1 \leq S1/S2 \leq 60$; an assembly unit, configured to electrically connect the first-type battery cell and the second-type battery cell in a manner including series connection to form the above battery module; and a control unit, configured to control the clamping arm unit and the assembling unit.

Therefore, the battery module manufactured by the manufacturing method and manufacturing device of the present application has a higher volume and weight energy density and excellent power performance.

Example

The technical solution of the present application and its advantages are described below in detail through a specific embodiment.

Preparation of Battery Cell

Reference is made to GB/T 31484-2015 *Cycle Life Requirements and Test Methods for Traction Battery of Electric Vehicle*, and a manufacturing method of a battery cell in each example and comparative example is as follows.

1. Preparation of Positive Electrode Slurry

A positive electrode material, conductive carbon black Super P and polyvinylidene fluoride (PVDF) as a binder are thoroughly stirred and mixed in an appropriate amount of N- methylpyrrolidone (referred to as NMP for short) solvent at a weight ratio of 95:3:2, so as to form a uniform and stable slurry with a viscosity of 12000 mPa•s, and the slurry was allowed to stand for 48 hours, within which no gelling, delamination, sedimentation, or other phenomena occurs.

2. Preparation of Positive Electrode Sheet

The slurry of the positive electrode material is uniformly coated on a positive current collector Al foil and is dried, then the electrode sheet is cold pressed to a designed compacted density and divided it into strips for later use, and thus a positive electrode sheet is obtained.

3. Preparation of Electrolytic Solution

Ethylene carbonate is dissolved in an equal volume of propylene carbonate, and then a lithium hexafluorophosphate salt is uniformly dissolved in the mixed solvent (the concentration of lithium hexafluorophosphate is 1.1 M/L) for later use, and thus an electrolytic solution is obtained.

4. Preparation of Negative Electrode Sheet

Graphite as a negative active material, conductive carbon black, polystyrene butadiene copolymer (SBR) as a binder and sodium carboxymethyl cellulose (CMC) as a thickener are fully stirred and mixed in a proper amount of water solvent at a weight ratio of 95:2:2:1 to form a uniformly stable negative electrode slurry; the slurry is evenly coated on a negative current collector Cu foil and is dried, and then the electrode sheet is cold pressed to a designed compacted density, and divided it into strips for later use.

5. Separator

PP is selected as a separator.

6. Preparation of Battery Cell

A conventional preparing process of a battery cell is used, the positive electrode sheet, the separator and the negative electrode sheet are wound together to form a bare battery cell, which is then placed into a housing of the battery, into which the electrolytic solution is injected, then formation process, sealing process, or other processes are carried out, and finally a rechargeable power battery cell is obtained.

*Assembly of Battery Module*

The battery module is a first-type battery cell and a second-type battery cell that are electrically connected in series, the first-type battery cell and the second-type battery cell are batteries of different chemical systems, the first-type battery cell includes six first battery cells, and the second-type battery cell includes three second battery cells, which are arranged in a BAAABAAAB manner (A represents the first battery cell and B represents the second battery cell).

*Test Method of Specific Surface Area*

Physical adsorption method of nitrogen: according to the adsorption law of gas on a solid surface, under a certain nitrogen pressure, a surface area of any powder material may adsorb nitrogen molecules, and corresponds to a determined equilibrium adsorption capacity, where the adsorption is pure physical adsorption, that is, a binding force of the adsorbed gas molecules and the solid surface is weak and reversible, that is, all the adsorbed nitrogen molecules are desorbed in the process that the temperature returns to a room temperature. An adsorption isotherm at a certain temperature and a certain relative pressure range is measured. According to an adsorption isotherm that accords with the experimental isotherm, the adsorption amount Vm required for the surface of the sample to be covered with a single layer of molecules is calculated.

$$S=Vm*N*Am/22400*W$$

where

Vm: saturated adsorption amount of for monolayer of nitrogen (ml)
Am: cross-sectional area of nitrogen molecule (Am=0.162nm$^2$)
W: weight of powder sample (g)
N: Avogadro constant
that is, S=4.36Vm/W

Calculate net mass of sample : mass of sample =M2-M1 (unit: mg; M1: a mass of a sample tube; M2: a total mass of the weighed sample and the sample tube)

*Test Method of Gram Capacity*

1. Test Method of Capacity:

select a battery cell to be tested, use a battery cell charging and discharging motor and a high and low temperature box to test a charge capacity and discharge capacity of the battery cell till full charge at a standard rate at 25°C, where the discharge capacity is a capacity value of the battery cell, and a charge-discharge rate is 0.33C (C represents a rated capacity of the battery cell. A charge/discharge current is the rate multiplied by the rated capacity of the battery cell, and the rated capacity is subject to a capacity of a battery cell identified in the GBT certification document of the battery cell);

A specific test process of the capacity of the battery cell is as follows: 1) stand at 25°C for 30 minutes; 2) perform discharging at a constant current of 0.33C till an end-of-discharge voltage (with a battery cell of an NCM chemical system set to 2.8V and a battery cell of a LFP chemical system set to 2.5V, for example), and then stand for 30 minutes; 3) perform charging at a constant current of 0.33C till an end-of-charge voltage (with a battery cell of an NCM chemical system set to 4.2V, 4.25V, 4.3V, 4.35V, 4.4V, 4.45V, or the like according to the specific type of the battery cell and a battery cell of a LFP chemical system generally being 3.65V, for example, where the end-of-charge voltage of the battery cell is recognized as well-known information in the art), perform charging at a constant voltage till a current <0.05C, and then stand for 5 minutes; and 4) perform discharging at a constant current of 0.33C to an end-of-discharge voltage. At this time, the measured discharge capacity is a capacity value of the battery cell. For the related term and test method, reference is made to GB/T 19596, GB/T 31484-2015, GB/T 31485-2015, GB/T 31486-2015 and *Safety Requirements for Traction Battery of Electric*

*Vehicle.*

2. Calculation of Gram Capacity:

$$\text{Gram capacity of positive active substance} = \text{capacity of battery cell} / (\text{mass}$$

$$\text{of electrode sheet-mass of positive current collector}) \times 100\%.$$

*Test Method of Volume Average Particle Size $D_v50$ and Volume Particle Size Distribution $D_v99$*

A laser scattering method is used for particle size analysis of a positive active substance, and a testing step mainly refers to the standard GB/T19077-2016 Particle Size Distribution - Laser Diffraction Method. It is measured by a laser particle size analyzer (Mastersizer 2000E, Malvern, UK).

The principle of the laser scattering method is that: a particle sample is dispersed in a suitable liquid or gas at a suitable concentration, so that it passes through a monochromatic beam; and when light encounters the particle, it is scattered at different angles, and the scattered light is measured by a multi-element detector. Through an appropriate optical model and mathematical process, the quantified scattering data is converted to obtain a percentage of a particle volume on a series of discrete particle size segments relative to a total particle volume, thereby obtaining the particle size volume distribution, so as to obtain a volume average particle size $D_v50$ and volume particle size distribution $D_v99$.

*Volume Energy Density of Battery Module*

A volume energy density of a battery module is a sum of energy of all battery cells in the battery module divided by a total volume of the battery module (length$\times$ width$\times$ height), where a total volume of the battery module is volumes of all battery cells and other components of the battery module (including but not limited to wire harness, an end plate and/or a side plate, and a top cover plate).

*Power Density of Battery Module*

In the present application, a test method of a power density of a battery module may be tested by the test method known in the art. As an example, the following method may be adopted for testing.

Test steps of a discharge current is as follows:

1. at a room temperature, test a capacity of a battery cell according to a national standard method;
2. adjust a sample to be tested to 50%SOC;
3. adjust the temperature to 25°C and stand for 2 hours;
4. under the condition of 25$\pm$2°C, for the sample to be tested, discharge at a certain discharge current I for 5s till an end-of-discharge voltage Umin 0.05 V specified in a product technical specification;
5. measure the maximum discharge current I of a first battery cell and a second battery cell according to the method of steps 1-4;
6. for the maximum discharge current of the battery module, take the smaller value of the maximum discharge currents of two types of battery cells; and
7. calculate a power density of an equivalent single cell of the battery module according to the following formula, power density = power of battery module power/ mass of battery module = current$\times$ (pulse cut-off voltage of first battery cell+pulse cut-off voltage of second battery cell)/ mass of battery module.

Battery modules of the following Examples 1-8 may be obtained by the method of the foregoing *Preparation of Battery Cell,* and physical parameters of positive active substances of a first battery cell and a second battery cell in each Example and Comparative Example are shown in Table 1. In the preparation process of a battery cell, a ratio S1/S2 of a specific surface area S1 of a positive active substance of the first battery cell to a specific surface area S2 of a positive active substance of the second battery cell is regulated and controlled to satisfy: 1$\leq$S1/S2$\leq$60.

Table 1

| | Positive Active Substance of First Battery Cell | | | | | Positive Active Substance of Second Battery Cell | | | | | Parameter of Battery Module | | | Electrical Performance of Battery Module | |
|---|---|---|---|---|---|---|---|---|---|---|---|---|---|---|---|---|
| | Component | Specific Surface Area S1 [m²/g] | Volume Average Particle Size D1 [μm] | Gram Capacity [mAh/g] | Dv99 [μm] | Component | Specific Surface Area S2 [m²/g] | Volume Average Particle Size D2 [μm] | Gram Capacity [mAh/G] | Dv99 [μm] | Ratio of Specific Surface Areas S1/S2 | Ratio of Particle Sizes D1/D2 | Dv99 Ratio | Energy Density of Equivalent Single Cell of Battery Module [Wh/L] | Power Density of Equivalent Single Cell of Battery Module @50%SOC, 5s Room Temperature [W/kg] |
| Example 1 | $LiNiPO_4$ | 4.6 | 3.1 | 155 | 20 | $LiNi_{0.65}Co_{0.07}Mn_{0.28}O_2$ | 4.1 | 2.9 | 191 | 8.4 | 1.1 | 1.07 | 2.38 | 431 | 2153 |
| Example 2 | $LiFePO_4$ | 8 | 2.7 | 159 | 15 | $LiNi_{0.55}Co_{0.12}Mn_{0.33}O_2$ | 2.1 | 3.0 | 185 | 9.1 | 3.8 | 0.90 | 1.65 | 440 | 2267 |
| Example 3 | $LiFePO_4$ | 10 | 2.4 | 159 | 11 | $LiNi_{0.55}Co_{0.12}Mn_{0.33}O_2$ | 1.4 | 3.1 | 186 | 9.8 | 7.1 | 0.77 | 1.12 | 444 | 2339 |
| Example 4 | $LiFePO_4$ | 13 | 1.9 | 159 | 9 | $LiNi_{0.55}Co_{0.12}Mn_{0.33}O_2$ | 1.1 | 3.3 | 186 | 10.2 | 11.8 | 0.58 | 0.88 | 444 | 2341 |
| Example 5 | $LiFePO_4$ | 15 | 1.4 | 160 | 8 | $LiNi_{0.55}Co_{0.12}Mn_{0.33}O_2$ | 0.8 | 3.9 | 186 | 10.7 | 18.8 | 0.36 | 0.75 | 445 | 2502 |
| Example 6 | $LiFePO_4$ | 25 | 0.8 | 159 | 13 | $LiNi_{0.55}Co_{0.12}Mn_{0.33}O_2$ | 0.7 | 4.2 | 186 | 13.1 | 35.7 | 0.19 | 0.99 | 443 | 2496 |
| Example 7 | $LiFePO_4$ | 21 | 1.1 | 160 | 6 | $LiNi_{0.55}Co_{0.12}Mn_{0.33}O_2$ | 0.5 | 7.1 | 186 | 11.5 | 42.0 | 0.15 | 0.52 | 442 | 2482 |

(continued)

| | Positive Active Substance of First Battery Cell | | | | | Positive Active Substance of Second Battery Cell | | | | | Parameter of Battery Module | | | Electrical Performance of Battery Module | |
|---|---|---|---|---|---|---|---|---|---|---|---|---|---|---|---|
| | Component | Specific Surface Area S1 [m²/g] | Volume Average Particle Size D1 [μm] | Gram Capacity [mAh/g] | Dv99 [μm] | Component | Specific Surface Area S2 [m²/g] | Volume Average Particle Size D2 [μm] | Gram Capacity [mAh/G] | Dv99 [μm] | Ratio of Specific Surface Areas S1/S2 | Ratio of Particle Sizes D1/D2 | Dv99 Ratio | Energy Density of Equivalent Single Cell of Battery Module [Wh/L] | Power Density of Equivalent Single Cell of Battery Module @50%SOC, 5s Room Temperature [W/kg] |
| Example 8 | $LiMn_{0.7}Fe_{0.3}PO_4$ | 35 | 0.5 | 156 | 15 | $LiNi_{0.55}Co_{0.12}Mn_{0.33}O_2$ | 0.6 | 5.1 | 186 | 14.2 | 58.3 | 0.10 | 1.06 | 424 | 2018 |
| Comparative Example 1 | $LiFePO_4$ | 37 | 0.4 | 157 | 17 | $LiNi_{0.55}Co_{0.12}Mn_{0.33}O_2$ | 0.6 | 6.8 | 184 | 17.7 | 61.7 | 0.06 | 0.96 | 411 | 1987 |
| Comparative Example 2 | $LiFePO_4$ | 1 | 4.3 | 150 | 33 | $LiNi_{0.55}Co_{0.12}Mn_{0.33}O_2$ | 7.2 | 1.9 | 187 | 9.1 | 0.1 | 2.26 | 3.63 | 418 | 1905 |

EP 4 047 712 A1

It can be seen that compared with Comparative Examples 1 and 2, in Examples 1 to 8 of the present application, when the ratio of the specific surface area S1 of the positive active substance of the first battery cell to the specific surface area S2 of the positive active substance of the second battery cell satisfies: $1 \leq S1/S2 \leq 60$, the battery module has a higher energy density and better power performance.

Embodiment 5 is the most preferred embodiment among all embodiments, that is, the battery module obtained by using Embodiment 5 has the highest energy density and the best power performance among all embodiments.

<About Design of Particle Size>

Hereinafter, the technical solution of the present application and its advantages are described in detail through specific embodiments.

Regarding preparation of a battery cell, a manner similar to that of *Preparation of Battery Cell* in the foregoing Examples 1 to 8 is adopted.

In addition, regarding test methods of a gram capacity and a volume average particle size of a positive active substance, manners similar to those of the foregoing Examples 1 to 8 are adopted.

Battery modules of the following Examples 5 and 9-14 may be obtained by the method of the foregoing *Preparation of Battery Cell,* and physical parameters of positive active substances of a first battery cell and a second battery cell in each Example are shown in Table 2. In the preparation process of a battery cell, a ratio D1/D2 of a volume average particle size of a positive active substance of the first battery cell D1 to a volume average particle size of a positive active substance of the second battery cell D2 is regulated and controlled to satisfy: $0.03 \leq D1/D2 \leq 10$.

In addition, battery modules of the following Examples 5 and 15-18 may be obtained by the method of the foregoing *Preparation of Battery Cell,* and physical parameters of positive active substances of a first battery cell and a second battery cell in each Example and Comparative Example are shown in Table 3. In the preparation process of a battery cell, a ratio Z1/Z2 of volume particle size distribution $D_v99$ Z1 of a positive active substance of the first battery cell to volume particle size distribution $D_v99$ Z2 of a positive active substance of the second battery cell is regulated and controlled to satisfy: $0.1 \leq Z1/Z2 \leq 5.5$.

Table 2

| | Positive Active Substance of First Battery Cell | | | | | Positive Active Substance of Second Battery Cell | | | | | Parameter of Battery Module | | | Electrical Performance of Battery Module | |
|---|---|---|---|---|---|---|---|---|---|---|---|---|---|---|---|
| | Component | Specific Surface Area S1 $[m^2/g]$ | Volume Average Particle Size D1 $[\mu m]$ | Gram Capacity [mAh/g] | Dv99 $[\mu m]$ | Component | Specific Surface Area S2 $[m^2/g]$ | Volume Average Particle Size D2 $[\mu m]$ | Gram Capacity [mAh/g] | Dv99 $[\mu m]$ | Ratio of Specific Surface Areas S1/S2 | Ratio of Particle Sizes D1/D2 | Dv99 Ratio | Energy Density of Equivalent Single Cell of Battery Module [Wh/L] | Power Density of Equivalent Single Cell of Battery Module @50%SOC, 5s Room Temperature [W/kg] |
| Example 5 | $LiFePO_4$ | 15 | 1.4 | 160 | 8 | $LiNi_{0.55}Co_{0.12}Mn_{0.33}O_2$ | 0.8 | 3.9 | 186 | 10.7 | 18.8 | 0.36 | 0.75 | 445 | 2502 |
| Example 9 | $LiFePO_4$ | 17 | 0.2 | 161 | 6 | $LiNi_{0.55}Co_{0.12}Mn_{0.33}O_2$ | 0.9 | 7.9 | 184 | 15.2 | 18.9 | 0.03 | 0.39 | 436 | 2181 |
| Example 10 | $LiFePO_4$ | 14 | 1.4 | 161 | 7 | $LiNi_{0.55}Co_{0.12}Mn_{0.33}O_2$ | 0.8 | 25.5 | 182 | 36.7 | 17.5 | 0.05 | 0.19 | 441 | 2457 |
| Example 11 | $LiFePO_4$ | 13 | 5.7 | 159 | 11 | $LiNi_{0.55}Co_{0.12}Mn_{0.33}O_2$ | 0.7 | 1.0 | 187 | 5.5 | 18.6 | 6.00 | 2.00 | 442 | 2236 |
| Example 12 | $LiFePO_4$ | 14 | 14.5 | 158 | 27 | $LiNi_{0.55}Co_{0.12}Mn_{0.33}O_2$ | 0.8 | 1.5 | 186 | 13.1 | 17.5 | 9.67 | 2.04 | 437 | 2098 |
| Example 13 | $LiFePO_4$ | 13 | 15.9 | 155 | 35 | $LiNi_{0.55}Co_{0.12}Mn_{0.33}O_2$ | 0.7 | 1.4 | 187 | 4.1 | 18.6 | 11.36 | 8.59 | 433 | 1997 |
| Example 14 | $LiFePO_4$ | 16 | 0.3 | 158 | 8 | $LiNi_{0.55}Co_{0.12}Mn_{0.33}O_2$ | 0.9 | 19.0 | 183 | 45.3 | 17.8 | 0.02 | 0.18 | 430 | 2010 |

Table 3

| | Positive Active Substance of First Battery Cell | | | | | Positive Active Substance of Second Battery Cell | | | | | Parameter of Battery Module | | | Electrical Performance of Battery Module | |
|---|---|---|---|---|---|---|---|---|---|---|---|---|---|---|---|
| | Component | Specific Surface Area S1 $[m^2/g]$ | Volume Average Particle Size D1 $[\mu m]$ | Gram Capacity [mAh/g] | Dv99 $[\mu m]$ | Component | Specific Surface Area S2 $[m^2/g]$ | Volume Average Particle Size D2 $[\mu m]$ | Gram Capacity [mAh/g] | Dv99 $[\mu m]$ | Ratio of Specific Surface Areas S1/S2 | Ratio of Particle Sizes D1/D2 | Dv99 Ratio | Energy Density of Equivalent Single Cell of Battery Module [Wh/L] | Power Density of Equivalent Single Cell of Battery Module @50%SOC, 5s Room Temperature [W/kg] |
| Example 5 | $LiFePO_4$ | 15 | 1.4 | 160 | 8 | $LiNi_{0.55}Co_{0.12}Mn_{0.33}O_2$ | 0.8 | 3.9 | 186 | 10.7 | 18.8 | 0.36 | 0.75 | 445 | 2502 |
| Example 15 | $LiFePO_4$ | 14 | 1.5 | 160 | 2.1 | $LiNi_{0.55}Co_{0.12}Mn_{0.33}O_2$ | 0.7 | 4.1 | 186 | 20.3 | 20.0 | 0.37 | 0.10 | 432 | 2291 |
| Embodiment 16 | $LiFePO_4$ | 13 | 1.1 | 160 | 4.5 | $LiNi_{0.55}Co_{0.12}Mn_{0.33}O_2$ | 0.7 | 3.7 | 186 | 14.8 | 18.6 | 0.30 | 0.30 | 435 | 2483 |
| Example 17 | $LiFePO_4$ | 15 | 1.2 | 160 | 25.3 | $LiNi_{0.55}Co_{0.12}Mn_{0.33}O_2$ | 0.8 | 3.8 | 186 | 8.4 | 18.8 | 0.32 | 3.01 | 441 | 2351 |
| Example 18 | $LiFePO_4$ | 16 | 1.3 | 160 | 37.6 | $LiNi_{0.55}Co_{0.12}Mn_{0.33}O_2$ | 0.9 | 4.2 | 186 | 6.9 | 17.8 | 0.31 | 5.45 | 433 | 2176 |
| Example 19 | $LiFePO_4$ | 16 | 0.9 | 160 | 37.6 | $LiNi_{0.55}Co_{0.12}Mn_{0.33}O_2$ | 1.0 | 2.9 | 186 | 5.8 | 16.0 | 0.31 | 6.48 | 425 | 2073 |
| Example 20 | $LiFePO_4$ | 14 | 1.5 | 160 | 2.1 | $LiNi_{0.55}Co_{0.12}Mn_{0.33}O_2$ | 0.7 | 4.3 | 184 | 23.2 | 20.0 | 0.35 | 0.09 | 421 | 2004 |

It can be seen from Table 2 that compared with Examples 13 and 14, in Examples 5, 9 and 10 to 12 of the present application, when a ratio D1/D2 of a volume average particle size D1 of a positive active substance of a first battery cell to a volume average particle size D2 of a positive active substance of a second battery cell is within a range of 0.03≤D1/D2≤10, the battery module has a higher energy density and better power performance.

It can be seen from Table 3 that compared with Examples 19 and 20, in Examples 5 and 15 to 18 of the present application, when a ratio Z1/Z2 of volume particle size distribution $D_v99$ Z1 of a positive active substance of a first battery cell to volume particle size distribution Dv99 Z2 of a positive active substance of a second battery cell is within a range of 0. 1≤Z1/Z2≤5.5, the battery module has a higher energy density and better power performance.

Example 5 is the most preferred embodiment among all embodiments, that is, the battery module obtained by using Embodiment 5 has the highest energy density and the best power performance among all embodiments.

<About Design of Compacted Density of Electrode Sheet>

Hereinafter, the technical solution of the present application and its advantages are described in detail through specific embodiments.

Regarding preparation of a battery cell, a manner similar to that of *Preparation of Battery Cell* in the foregoing Examples 1 to 8 is adopted.

In addition, regarding test methods of a gram capacity and a volume average particle size of a positive active substance, manners similar to those of the foregoing Examples 1 to 8 are adopted.

*Measuring Method of Compacted Density of Positive Electrode Sheet*

A compacted density of a positive electrode sheet may be measured by the method known in the art. As an example, the measuring method is as follows: take a single-sided coated and cold-pressed positive electrode sheet (if it is a double-sided coated electrode sheet, a positive film layer on one side may be wiped off first), and punch and cut it into a small round sheet with an area of S1, weigh its weight, which is denoted as M1; test a thickness of positive film layer, which is denoted as H; and then wipe off the positive film layer, and weigh a weight of the positive current collector, which is denoted as M2; where a compacted density of the positive film layer is dc = (M1-M2)/S1/H.

Battery modules of the following Examples 5 and 21-24 may be obtained by using the method of the foregoing *Preparation of Battery Cell,* and physical parameters of positive active substances of a first battery cell and a second battery cell in each Example and Comparative Example are shown in Table 4. In the preparation process of a battery cell, a ratio C1/C2 of a compacted density C1 of a positive electrode sheet of a first battery cell to a compacted density C2 of a positive electrode sheet of a second battery cell is regulated and controlled to satisfy: 0.35≤C1/C2≤0.99.

Table 4

| | Positive Active Substance of First Battery Cell | | | | | Positive Active Substance of Second Battery Cell | | | | | Parameter of battery module | | | Electrical Performance of Battery Module | |
|---|---|---|---|---|---|---|---|---|---|---|---|---|---|---|---|
| | Component | Specific Surface Area S1 [m2/g] | Volume Average Particle Size D1 [μm] | Dv99 [μm] | Compacted Density C1 [g/cm³] | Component | Specific Surface Area S2 [m2/g] | Volume Average Particle Size D2 [μm] | Dv99 [μm] | Compacted Density Z2 [g/cm³] | Ratio of Specific Surface Areas S1/S2 | Dv99 ratio | Compacted Density of Positive Electrode C1/C2 | Energy Density of Equivalent Single Cell of Battery Module [Wh/L] | Power Density of Equivalent Single Cell of Battery Module @50%SOC, 5s Room Temperature [W/kg] |
| Embodiment 5 | $LiFePO_4$ | 15 | 1.4 | 8 | 2.4 | $LiNi_{0.55}Co_{0.12}Mn_{0.33}O_2$ | 0.8 | 3.9 | 10.7 | 3.35 | 18.8 | 0.36 | 0.72 | 445 | 2502 |
| Embodiment 21 | $LiFePO_4$ | 15.0 | 1.4 | 8 | 1.6 | $LiNi_{0.55}Co_{0.12}Mn_{0.33}O_2$ | 0.8 | 3.9 | 11 | 4.2 | 18.8 | 0.36 | 0.38 | 444 | 2281 |
| Embodiment 22 | $LiFePO_4$ | 15.0 | 1.4 | 8 | 1.8 | $LiNi_{0.55}Co_{0.12}Mn_{0.33}O_2$ | 0.8 | 3.9 | 11 | 3.8 | 18.8 | 0.36 | 0.47 | 442 | 2397 |
| Embodiment 23 | $LiFePO_4$ | 15.0 | 1.4 | 8 | 2.0 | $LiNi_{0.55}Co_{0.12}Mn_{0.33}O_2$ | 0.8 | 3.9 | 11 | 3.2 | 18.8 | 0.36 | 0.63 | 442 | 2488 |
| Embodiment 24 | $LiFePO_4$ | 15.0 | 1.4 | 8 | 2.9 | $LiNi_{0.55}Co_{0.12}Mn_{0.33}O_2$ | 0.8 | 3.9 | 11 | 3.6 | 18.8 | 0.36 | 0.81 | 449 | 2135 |
| Embodiment 25 | $LiFePO_4$ | 15.0 | 1.4 | 8 | 1.3 | $LiNi_{0.55}Co_{0.12}Mn_{0.33}O_2$ | 0.8 | 3.9 | 11 | 4.0 | 18.8 | 0.36 | 0.33 | 429 | 2109 |
| Embodiment 26 | $LiFePO_4$ | 15.0 | 1.4 | 8 | 3.0 | $LiNi_{0.55}Co_{0.12}Mn_{0.33}O_2$ | 0.8 | 3.9 | 11 | 3.0 | 18.8 | 0.36 | 1.00 | 427 | 2021 |

It can be seen from Table 4 that compared with Examples 25 and 26, in Examples 5, 21-24 of the present application, when a ratio C1/C2 of a compacted density C1 of a positive electrode sheet of a first battery cell to a compacted density C2 of a positive electrode sheet of a second battery cell is within a range of $0.35 \leq C1/C2 \leq 0.99$, the battery module has a higher energy density and better power performance

Embodiment 5 is the most preferred embodiment among all embodiments, that is, the battery module obtained by using Embodiment 5 has the highest energy density and the best power performance among all embodiments.

Embodiments or implementations in the specification are described in a progressive manner, and each embodiment focuses on illustration of the difference from other embodiments, and the identical or similar parts between the embodiments may refer to each other.

In the description of the present specification, the description of reference terms "one embodiment", "some embodiments", "an exemplary embodiment", "an example", "a specific example", "some examples", or the like refers to a particular feature, structure, material or characteristic described in combination with the embodiment or example included in at least one embodiment or example of the present application. In the present specification, schematic expressions of the foregoing terms do not necessarily refer to the same embodiment or example. Moreover, the particular feature, structure, material, or characteristic described may be combined in a suitable manner in any one or more embodiments or examples.

Finally, it should be noted that the foregoing embodiments are merely intended for describing the technical solutions of the present application, but not for limiting the present application. Although the present application is described in detail with reference to the foregoing embodiments, persons of ordinary skill in the art should understand that they may still make modifications to the technical solutions described in the foregoing embodiments or make equivalent replacements to some or all technical features thereof, and such modifications and replacements will not make the nature of the corresponding technical solutions depart from the scope of the embodiments of the present application.

## Claims

1. A battery module, wherein the battery module comprises a first-type battery cell and a second-type battery cell at least connected in series, the first-type battery cell and the second-type battery cell are battery cells of different chemical systems,

   the first-type battery cell comprises N first battery cell(s),
   the second-type battery cell comprises M second battery cell(s), N and M are positive integers, and
   a specific surface area of a positive active substance of a first battery cell is S1, a specific surface area of a positive active substance of a second battery cell is S2, which satisfy: $1 \leq S1/S2 \leq 60$.

2. The battery module according to claim 1, wherein $4 \leq S1/S2 \leq 42$, and optionally, $7 \leq S1/S2 \leq 35$.

3. The battery module according to claim 1 or 2, wherein the positive active substance of the first battery cell and the positive active substance of the second battery cell further at least satisfy one of the following conditions:

   (1) a gram capacity of the positive active substance of the second battery cell is higher than a gram capacity of the positive active substance of the first battery cell;
   (2) a volume average particle size ($D_v50$) of the positive active substance of the first battery cell is D1, and a volume average particle size ($D_v50$) of the positive active substance of the second battery cell is D2, and $0.03 \leq D1/D2 \leq 10$, optionally, $0.05 \leq D1/D2 \leq 6$, and further optionally, $0.10 \leq D1/D2 \leq 3$; and
   (3) volume particle size distribution $D_v99$ of the positive active substance of the first battery cell is Z1, and volume particle size distribution $D_v99$ of the positive active substance of the second battery cell is Z2, which satisfy: $0.1 \leq Z1/Z2 \leq 5.5$. optionally, $0.3 \leq Z1/Z2 \leq 3.0$, and further optionally $0.4 \leq Z1/Z2 \leq 2.5$.

4. The battery module according to any one of claims 1 to 3, wherein

   a volume average particle size ($D_v50$) D1 of the positive active substance of the first battery cell is 0.2-15 $\mu$m, and a volume average particle size ($D_v50$) D2 of the positive active substance of the second battery cell is 0.5-30 $\mu$m;
   optionally, D1 is 0.5-10 $\mu$m and D2 is 1-20 $\mu$m; and
   further optionally, D1 is 1-6 $\mu$m and D2 is 2-15 $\mu$m.

5. The battery module according to any one of claims 1 to 4, wherein

a compacted density of a positive electrode sheet of the first battery cell is C1, and a compacted density of a positive electrode sheet of the second battery cell is C2, and $0.35 \leq C1/C2 \leq 0.99$, optionally $0.45 \leq C1/C2 \leq 0.90$, and further optionally $0.55 \leq C1/C2 \leq 0.85$.

6. The battery module according to any one of claims 1 to 5, wherein

a compacted density C1 of a positive electrode sheet of the first battery cell is 1.6-3.0 g/cm$^3$, and a compacted density C2 of a positive electrode sheet of the second battery cell is 3.1-4.2 g/cm$^3$;
optionally, a compacted density C1 of a positive electrode sheet of the first battery cell is 2.1-2.8 g/cm$^3$, and a compacted density C2 of a positive electrode sheet of the second battery cell is 3.2-3.7 g/cm$^3$; and
further optionally, a compacted density C1 of a positive electrode sheet of the first battery cell is 2.3-2.6 g/cm$^3$, and a compacted density C2 of a positive electrode sheet of the second battery cell is 3.3-3.5 g/cm$^3$.

7. The battery module according to any one of claims 1 to 6, wherein the positive active substance of the first battery cell comprises at least one of lithium containing phosphate shown in formula (I) or lithium manganese-based oxide shown in formula (II),

$$LiFe_{1-x2-y2}Mnx_2M'_{y2}PO_4 \qquad \text{formula (I)}$$

$$Li_{1+x3}Mn_eN_{2-e}O_{4-d}B_d \qquad \text{formula (II)}$$

wherein in formula (I), $0 \leq x2 \leq 1$, $0 \leq y2 \leq 0.1$, and M' is selected from one or more of transition metal elements other than Fe and Mn and non-transition metal elements; and in formula (II), $-0.1 \leq x3 \leq 0.2$, $0 < e \leq 2$, and $0 \leq d < 1$, N is one or more of Ni, Fe, Cr, Ti, Zn, V, Al, Mg, Zr and Ce, and B is one or more of S, N, F, Cl, Br and I; and
optionally, the positive active substance of the first battery cell comprises one or more of $LiFePO_4$, $LiMnPO_4$, $LiMn_{1-x3}Fe_{x3}PO_4$, $LiV_{1-x3}Fe_{x3}PO_4$, $LiMn_2O_4$, $LiMn_{1.9}Al_{0.1}O_4$, wherein x3 independently satisfies $0 < x3 < 1$.

8. The battery module according to any one of claims 1 to 7, wherein the positive active substance of the second battery cell comprises lithium transition metal oxide shown in formula (III),

$$Li_{1+x1}Ni_aCo_bM_{1-a-b}O_{2-y1}A_{y1} \qquad \text{formula (III)}$$

wherein $-0.1 \leq x1 \leq 0.2$, $0.3 \leq a < 0.95$, $0 < b < 0.2$, $0 < a+b < 1$, $0 \leq y1 < 0.2$, M is selected from one or more of Mn, Fe, Cr, Ti, Zn, V, Al, Zr and Ce, and A is selected from one or more of S, F, Cl and I; optionally, $0.5 \leq a < 0.95$, $0 < b < 0.15$.

9. The battery module according to any one of claims 1 to 8, wherein
a ratio of a number N of the first cells to a number M of the second cells is $0.1 \leq N/M \leq 50$, and optionally $0.3 \leq N/M \leq 10$.

10. A battery pack, comprising the battery module according to any one of claims 1 to 9.

11. A power consumption apparatus, comprising the battery module according to any one of claims 1 to 9 or the battery pack according to claim 10, wherein the battery module or the battery pack is used as a power source or an energy storage unit of the power consumption apparatus.

12. A manufacturing method of a battery module, comprising the following steps:

acquiring a first-type battery cell and a second-type battery cell, wherein the first-type battery cell and the second-type battery cell are battery cells of different chemical systems,
the first-type battery cell comprises N first battery cell(s);
the second-type battery cell comprises M second battery cell(s), N and M are positive integers; and
a specific surface area of a positive active substance of a first battery cell is S1, a specific surface area of a positive active substance of a second battery cell is S2, which satisfy: $1 \leq S1/S2 \leq 60$; and
electrically connecting the first-type battery cell and the second-type battery cell in a manner comprising series connection to form the battery module according to any one of claims 1 to 9.

13. A manufacturing device of a battery module, comprising:

a clamping arm unit, configured to acquire a first-type battery cell and a second-type battery cell, wherein the first-type battery cell and the second-type battery cell are battery cells of different chemical systems,
the first-type battery cell comprises N first battery cell(s);
the second battery cell comprises M second battery cell(s), N and M are positive integers; and
a specific surface area of a positive active substance of a first battery cell is S1, a specific surface area of a positive active substance of a second battery cell is S2, which satisfy: $1 \leq S1/S2 \leq 60$;
an assembly unit, configured to electrically connect the first-type battery cell and the second-type battery cell in a manner comprising series connection to form the battery module according to any one of claims 1 to 9; and
a control unit, configured to control the clamping arm unit and the assembling unit.

FIG. 1

FIG. 2

**4**

5a

W ← → L

FIG. 3

1

FIG. 4

FIG. 5

FIG. 6

## INTERNATIONAL SEARCH REPORT

| | International application No. |
|---|---|
| | **PCT/CN2020/139183** |

**A.    CLASSIFICATION OF SUBJECT MATTER**

H01M 10/42(2006.01)i

According to International Patent Classification (IPC) or to both national classification and IPC

**B.    FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT; WPI; EPODOC; CNKI: 电池, 组, 包, 串联, 不同, 电芯, 第一, 第二, 比表面积, 磷酸铁锂, battery, group, pack, different, core, first, second, surface, area

**C.    DOCUMENTS CONSIDERED TO BE RELEVANT**

| Category* | Citation of document, with indication, where appropriate, of the relevant passages | Relevant to claim No. |
|---|---|---|
| X | CN 208674305 U (DONGGUAN TAFEL NEW ENERGY TECHNOLOGY CO., LTD. et al.) 29 March 2019 (2019-03-29) description paragraphs 2, 11-26, embodiment 1, figures 1-2 | 1-4, 7-13 |
| X | CN 110635169 A (TOYOTA JIDOSHA KABUSHIKI KAISHA) 31 December 2019 (2019-12-31) description paragraphs 48-151 | 1-4, 7-13 |
| X | CN 102263424 A (FANG, Zhengqiang) 30 November 2011 (2011-11-30) description, paragraphs 35-39, and figures 1-5 | 1-4, 7-13 |
| X | CN 201749897 U (FANG, Zhengqiang) 16 February 2011 (2011-02-16) description, paragraphs 35-39, and figures 1-5 | 1-4, 7-13 |
| A | US 2014342216 A1 (ROBERT BOSCH GMBH et al.) 20 November 2014 (2014-11-20) entire document | 1-13 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 August 2021** | **26 August 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/139183**

| Patent document cited in search report | | | Publication date (day/month/year) | Patent family member(s) | | | Publication date (day/month/year) |
|---|---|---|---|---|---|---|---|
| CN | 208674305 | U | 29 March 2019 | None | | | |
| CN | 110635169 | A | 31 December 2019 | DE | 102019110961 | A1 | 02 January 2020 |
| | | | | JP | 2020004488 | A | 09 January 2020 |
| | | | | US | 2019389407 | A1 | 26 December 2019 |
| CN | 102263424 | A | 30 November 2011 | None | | | |
| CN | 201749897 | U | 16 February 2011 | None | | | |
| US | 2014342216 | A1 | 20 November 2014 | US | 9799873 | B2 | 24 October 2017 |
| | | | | DE | 102013209069 | A1 | 20 November 2014 |
| | | | | EP | 2804252 | A1 | 19 November 2014 |
| | | | | EP | 2804252 | B1 | 14 June 2017 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB T195872004 A
- GB T190772016 A
- GB T314842015 A
- GB T19596 A
- GB T314852015 A
- GB T314862015 A